# EUROPEAN PATENT SPECIFICATION

(11) **EP 2 842 042 B1**
(45) Date of publication and mention of the grant of the patent: **25.05.2016**
(21) Application number: 13781882.9
(22) Date of filing: 24.04.2013
(51) Int. Cl.: G06F 17/30, G06F 3/0481, H04L 12/911, H04L 12/18, G06F 3/14, H04N 7/15, H04N 21/2343, H04N 21/485, H04N 21/81

(54) **RELAY DEVICE, DISPLAY DATA SHARING SYSTEM, DATA CONTROL METHOD, AND COMPUTER-READABLE STORAGE MEDIUM**
RELAISVORRICHTUNG, SYSTEM ZUR GEMEINSAMEN NUTZUNG VON ANZEIGEDATEN, DATENSTEUERVERFAHREN UND COMPUTERLESBARES SPEICHERMEDIUM
DISPOSITIF DE RELAIS, SYSTÈME DE PARTAGE DE DONNÉES D'AFFICHAGE, PROCÉDÉ DE CONTRÔLE DE DONNÉES ET SUPPORT D'ENREGISTREMENT LISIBLE PAR ORDINATEUR

(30) Priority: 25.04.2012 JP 2012099413
(43) Date of publication of application: 04.03.2015
(73) Proprietor: Ricoh Company, Ltd., Tokyo 143-8555 (JP)
(72) Inventor: NAGASE, Tatsuya, Tokyo 143-8555 (JP); KATO, Yoshinaga, Tokyo 143-8555 (JP)
(74) Representative: Schwabe - Sandmair - Marx
(86) International application number: PCT/JP2013/062739
(87) International publication number: WO 2013/162055

(56) References cited:
- WO-A1-2011/138970
- JP-A- 2004 187 170
- JP-A- 2005 086 677
- JP-A- 2011 059 675
- US-A1- 2008 130 525
- US-A1- 2011 261 142

## Description

### TECHNICAL FIELD

The present invention relates to a relay device that relays data transmitted and received between communication terminals, a display data sharing system including the relay device, a data control method implemented by the relay device, and a computer-readable storage medium for executing the data control method.

### BACKGROUND ART

With the widespread use of the Internet and improvements in the Internet speed, systems and services have become available that enable to hold a conference, such as a teleconference, at remote places without forcing participants of the conference to meet at one place with effort and time. With use of the systems and the services, travel cost and time can be reduced and a conference can be held at any time as needed.

In the system that realizes a teleconference, communication terminals located in remote places transmit and receive image data and voice data to and from each other directly by the Internet or indirectly via a server. In recent years, with the widespread use of an optical communication line that enables a long-haul high-capacity data communication, it becomes possible to transmit and receive high-quality image data and high-quality voice data. Therefore, it is possible to easily recognize the situation of the other party and listen to a discussion in the teleconference.

In the conventional system as described above, or in a system such as disclosed in the document US 2011/0261142 A1 it is possible to distribute, to the other party, not only image data and voice data obtained obtained by capturing images and recording sound but also display data of a document of the conference to be referred to by the other party (see, for example, Japanese Patent Application Laid-open No. 2011-254453). Therefore, the participants of the teleconference can recognize the situation of the other party, listen to discussions given by the other party, and refer to the document of the conference.

In this system, when a transmission terminal serving as a transmission source receives display data from an external input device connected to the transmission terminal, the transmission terminal acquires IP (Internet Protocol) addresses of a relay device and a transmission destination terminal serving as a destination, and transmits the IP address of the transmission destination terminal to the relay device together with the display data. The relay device transmits the display data to the transmission destination terminal based on the IP address. The transmission destination terminal displays both of an image based on the display data and an image based on captured image data.

The display data to be displayed together with the image data can be displayed based on a layout information management table without operation by a participant of the conference (see Japanese Patent Application No. 2011-175417). Therefore, the participant need not select one piece of the display data from a plurality of pieces of the display data. Furthermore, the display data is displayed such that the display size thereof becomes greater than the display size of the image data. Therefore, presentation of the display data to be focused on is possible.

In the system as described above, it is possible to display only the display data. However, even when only the display data is displayed, image data that is not to be displayed is received. Therefore, extra load is applied to the network. Depending on the network environment and the number of the participants of the conference, it becomes difficult to appropriately display the image data and the display data or to listen to voice due to the load on the network. In such a situation, it is difficult to smoothly conduct a conference.

Therefore, there is a need for a device and a method capable of reducing the network load so as to smoothly conduct a conference.

### DISCLOSURE OF INVENTION

It is an object of the present invention to at least partially solve the problems in the conventional technology.

According to an embodiment, there is provided a relay device for relaying data transmitted and received between communication terminals. The relay device includes a receiving unit configured to receive a notice of changed layout information from a communication terminal that displays at least one of image data of a captured image and display data of a document in at least one area of a screen based on layout information, the image data and the display data being contained in the data transmitted and received between the communication terminals; a changing unit configured to change management information for managing transmission of the data to the communication terminal according to the notified layout information; and a control unit configured to control transmission of at least one of the display data and the image data to the communication terminal according to the changed management information.

The above and other objects, features, advantages and technical and industrial significance of this invention will be better understood by reading the following detailed description of presently preferred embodiments of the invention, when considered in connection with the accompanying drawings.

### BRIEF DESCRIPTION OF DRAWINGS

Fig. 1 is a diagram illustrating a configuration example of a display data sharing system according to an embodiment;
Fig. 2 is a diagram illustrating an example of a hardware configuration of a relay device according to the embodiment;
Fig. 3 is a diagram illustrating an example of a hardware configuration of a communication terminal used together with the relay device in the display data sharing system;
Fig. 4 is a functional block diagram illustrating an example of the communication terminal used together with the relay device;
Fig. 5 is a diagram illustrating an example of a transmission management table stored in the communication terminal;
Fig. 6 is a diagram illustrating an example of a relationship between layout information and video data or display data allocated to each area;
Figs. 7A and 7B are diagrams illustrating examples of division of a display and divided areas;
Fig. 8 is a functional block diagram illustrating an example of the relay device according to the embodiment;
Fig. 9 is a diagram illustrating an example of a reception management table stored in the relay device;
Fig. 10 is a diagram illustrating an example of a transmission management table stored in the relay device;
Fig. 11 is a flowchart of a first example of a data control process performed by the display data sharing system;
Fig. 12 is a flowchart of a second example of the data control process performed by the display data sharing system; and
Fig. 13 is a flowchart of a third example of the data control process performed by the display data sharing system.

### BEST MODE(S) FOR CARRYING OUT THE INVENTION

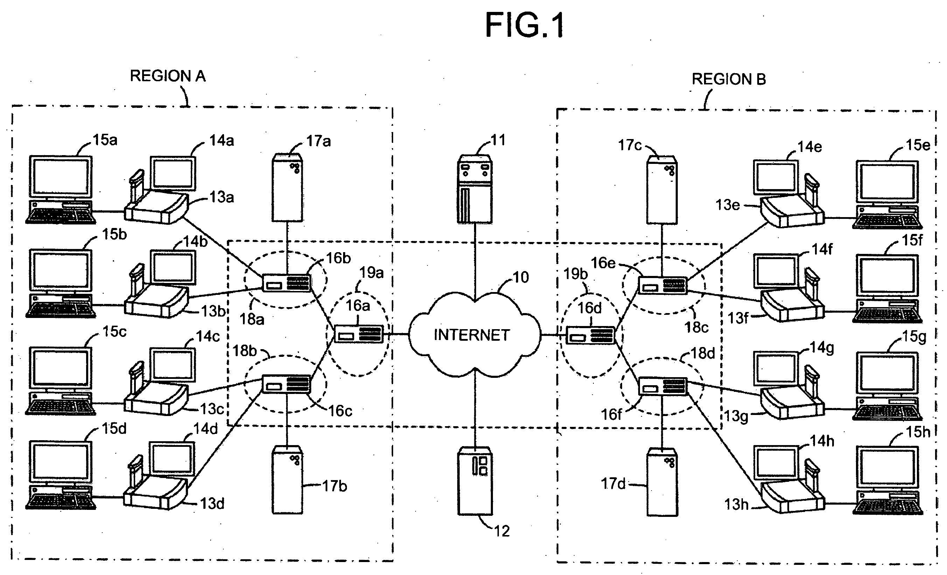

Fig. 1 is a diagram illustrating a configuration example of a display data sharing system according to an embodiment. In Fig. 1, the display data sharing system is constructed of communication systems located in two geographically remote regions A and B. While the two regions A and B are employed in the embodiment, the display data sharing system may be constructed of communication systems located in three or more regions. The display data sharing system is a system that can transmit document data (hereinafter, referred to as display data) of a document of a conference to be referred to by other parties to the communication terminals of the participants of the conference so that the display data can be shared, and that can transmit image data (hereinafter, referred to as video data) captured by each of the communication terminals to the other communication terminals used by the other participants so that the conference can be held while the participants can view the faces of one another.

The communication systems located in the regions A and B are communicably connected to each other via an Internet 10, and the communication is performed by using an appropriate communication protocol, such as TCP/IP (Transmission Control Protocol/Internet Protocol). A management server 11 and a program providing server 12 are also connected to the Internet 10. The management server 11 and the program providing server 12 are located outside of the regions A and B in Fig. 1. However, the management server 11 and the program providing server 12 may be located in the region A or the region B. Alternatively, one of the management server 11 and the program providing server 12 may be located in the region A and the other may be located in the region B.

The program providing server 12 includes a storage device, such as an HD (Hard Disk), that stores therein a program to be provided to each of the communication system installed in the region A, the communication system installed in the region B, and the management server 11. The program providing server 12 can transmit the program in response to a request from each of the communication systems and the management server 11. The program realizes various functions by being installed in the communication system and the management server 11.

The management server 11 receives the program transmitted by the program providing server 12, installs the program, and manages a communication between the communication systems located in the two regions A and B. Therefore, the management server 11 includes a storage device, such as an HD, and the storage device stores therein various tables for managing the communication.

For example, the storage device stores therein a terminal authentication management table. The terminal authentication management table manages terminal IDs assigned to all of the communication terminals and passwords in an associated manner. The terminal IDs and the passwords are used for authentication for login to the display data sharing system for conducting a teleconference.

In addition, the storage device stores therein a relay device management table for storing and managing an operating state and an IP address of each of the relay devices. The storage device also stores therein a destination list management table for storing and managing terminal IDs of all communication terminals registered as candidate destination communication terminals, in association with each terminal ID of a communication terminal serving as a request source that issues a request to start a teleconference. The storage device also stores therein a session management table for storing and managing relay device IDs of relay devices used to relay video data, voice data, and display data, the terminal IDs of the communication terminals serving as the request sources, and the terminal IDs of the destination communication terminals, in an associated manner for each selection session ID used to execute a session for selecting a relay device.

The communication system located in the region A includes communication terminals 13a to 13d, displays 14a to 14d respectively connected to the communication terminals 13a to 13d, external input devices 15a to 15d respectively connected to the communication terminals 13a to 13d, a router 16a connected to the Internet 10, routers 16b and 16c that connect the router 16a and the communication terminals 13a to 13d, and relay devices 17a and 17b connected to the routers 16b and 16c.

The communication terminals 13a and 13b, the router 16b, and the relay device 17a are communicably connected to one another via a LAN (Local Area Network) 18a. The communication terminals 13c and 13d, the router 16c, and the relay device 17b are communicably connected to one another via a LAN 18b. The LANs 18a and 18b are communicably connected to each other via a leased line 19a including the router 16a. For example, the region A is Japan, the LAN 18a is constructed in a head office in Tokyo, and the LAN 18b is constructed in a local office in Osaka.

The communication system installed in the region B includes communication terminals 13e to 13h, displays 14e to 14h respectively connected to the communication terminals 13e to 13h, external input devices 15e to 15h respectively connected to the communication terminals 13e to 13h, a router 16d connected to the Internet 10, routers 16e and 16f that connect the router 16d and the communication terminals 13e to 13h, and relay devices 17c and 17d connected to the routers 16e and 16f.

The communication terminals 13e and 13f, the router 16e, and the relay device 17c are communicably connected to one another via a LAN 18c. The communication terminals 13g and 13h, the router 16f, and the relay device 17d are communicably connected to one another via a LAN 18d. The LANs 18c and 18d are communicably connected to each other via a leased line 19b including the router 16d. For example, the region B is China, the LAN 18c is constructed in a local office in Beijing, and the LAN 18d is constructed in a local office in Shanghai.

Hereinafter, arbitrary ones of the communication terminals, the displays, the external input devices, the routers, and the relay devices are referred to as "the communication terminal 13", "the display 14", "the external input device 15", "the router 16", and "the relay device 17", respectively. The same applies to the other components.

The communication terminal 13 transmits and receives video data of captured video and voice data of input voice to and from the other communication terminals 13. The video data may be moving image data or still image data. The video data may be data containing both of a moving image and a still image. The video data and the voice data can be distributed by streaming such that the video data and the voice data can be received and reproduced at the same time. The video data can be transmitted and received by being compressed and encoded. As a technology for the compression encoding, H.264/SVC can be employed. In H.264/SVC, pieces of data are encoded and transmitted to the other party by being separated into two channels, and the other party decodes the pieces of the data by appropriately combining the two channels according to the network status or the capability of a reproduction equipment. Therefore, it is possible to extract and reproduce appropriate data without failure.

The communication terminal 13 displays at least one of the video data, the voice data, and the display data transmitted by the other communication terminal 13 in one or more areas in a screen of the display 14 according to layout information set in advance. The layout information is information on display of the video data and the display data.

The display 14 displays the video data transmitted and received by the communication terminals 13 and also displays, as the display data, document data used in a conference. The display 14 is a display for the communication terminal 13. The external input device 15 acquires a document displayed on a display device thereof at predetermined time intervals, and transmits, as the display data, the acquired image to the communication terminal 13 at predetermined time intervals. Examples of the display data include document data, spreadsheet data, and image data used by document generation software, spreadsheet software, and presentation software. The display data may be moving image data. The display 14 may be a liquid crystal display or an organic EL (electroluminescence) display as long as the display can display images of a subject or operation icons.

The router 16 selects an optimal route of the video data, the voice data, and the display data. Therefore, the router 16 stores therein a routing table containing the IP addresses of the router 16 and the communication terminal 13 serving as transmission sources and the IP addresses of the router 16 and the communication terminal 13 serving as transmission destinations. The router 16 includes a storage unit, and the storage unit stores therein the routing table in which the IP address of the transmission source and the IP address of the transmission destination are associated with each other. When a communication is performed, a MAC (Media Access Control) address may be used in addition to the IP address. The IP address may be represented by, for example, "1.2.1.3" in general IPv4 format. However, the IP address is not limited to this example and may be in IPv6 format.

The relay device 17 is connected to the router 16 and relays the video data, the voice data, and the display data transmitted and received between the communication terminals 13. In this case, the relay device 17 determines to which communication terminal 13 the video data, the voice data, and the display data are transmitted and for which communication terminal 13 the data transmission is stopped. The display data sharing system illustrated in Fig. 1 includes the four relay devices 17 and what relay device 17 is to be employed is selected by the communication terminal 13 as will be described later.

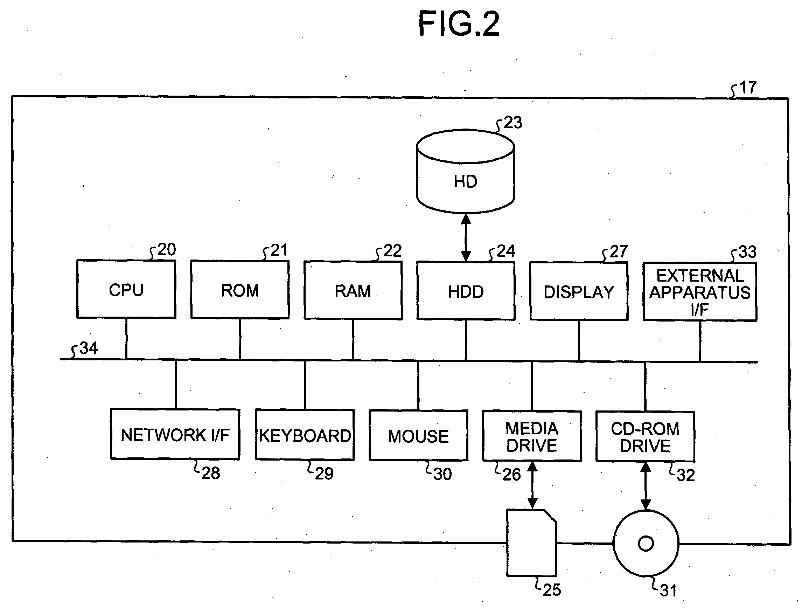

Fig. 2 is a diagram illustrating an example of a hardware configuration of the relay device 17 according to the embodiment. The same hardware configuration is also applied to the management server 11 and the external input device 15 illustrated in Fig. 1. The relay device 17 includes a CPU (Central Processing Unit) 20 that controls the entire relay device 17, a ROM (Read Only Memory) 21 for storing a relay device program, a RAM (Random Access Memory) 22 used as a working space for the CPU 20, an HD 23 for storing various types of data, an HDD (Hard Disk Drive) 24 that controls read and write of various types of data with respect to the HD 23 under the control of the CPU 20, and a media drive 26 that controls read and write of data with respect to a storage medium 25, such as a flash memory.

The relay device 17 also includes a display 27 that displays various types of information, such as a cursor, a menu, an window, a character, and video, a network I/F (interface) 28 that transfers data by using a communication network, a keyboard 29 including a plurality of keys for inputting characters, values, and various instructions, a mouse 30 for selecting and executing various instructions, for selecting a subject to be processed, or for moving a cursor, a CD-ROM (Compact Disc-ROM) drive 32 that controls read and write of data with respect to a CD-ROM 31 that is an example of a removable storage medium, an external apparatus I/F 33 that transmits and receives data to and from an external apparatus, and a bus line 34, such as an address bus or a data bus, for enabling electrical connection.

The relay device program can be distributed in a computer-installable or computer-executable file format, and may be downloaded from the program providing server 12. The relay device program may be provided by being stored in a computer-readable storage medium, such as the storage medium 25 or the CD-ROM 31. The communication network is a network constructed of the LAN 18, the leased line 19, and the Internet 10. Functions to be realized by executing the relay device program will be explained later.

In the management server 11 having the same hardware configuration, a management server program is stored in the ROM 21. In the external input device 15 having the same hardware configuration, an external input device program is stored in the ROM 21. These programs may be provided in a computer-installable or computer-executable file format and may be downloaded from the program providing server 12. These programs may be provided by being stored in a computer-readable storage medium, such as the storage medium 25 or the CD-ROM 31.

The storage medium may be a computer-readable storage medium, such as a CD-R (Compact Disc-Recordable), a CD-RW (Compact Disc-ReWritable), a DVD (Digital Versatile Disk), or a Blu-ray disc, in addition to the storage medium 25 or the CD-ROM 31.

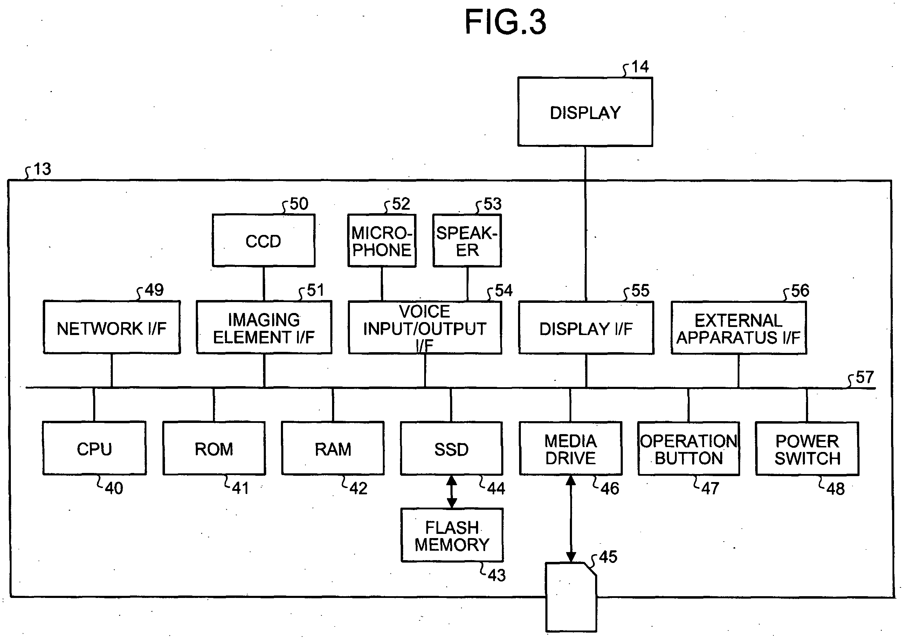

Fig. 3 is a diagram illustrating an example of a hardware configuration of the communication terminal 13 used together with the relay device 17 in the display data sharing system. The communication terminal 13 includes a CPU 40 that controls the entire communication terminal 13, a ROM 41 for storing a communication terminal program for realizing processes performed by the communication terminal 13, and a RAM 42 used as a working space for the CPU 40. The communication terminal 13 also includes a flash memory 43 for storing various types of data, such as video data or voice data, an SSD (Solid State Drive) 44 that controls read and write of various types of data with respect to the flash memory 43 under the control of the CPU 40, a media drive 46 that controls read and write of data with respect to a storage medium 45, such as a flash memory, an operation button 47 to be operated to select a destination for the communication terminal 13, a power switch 48 for switching between ON and OFF of the power of the communication terminal 13, and a network I/F 49 for transferring data by using the communication network.

The communication terminal 13 also includes a CCD (Charged Coupled Device) 50 that captures a subject and acquires video data of the captured video under the control of the CPU 40, an imaging element I/F 51 for controlling driving of the CCD 50, a microphone 52 for inputting voice, a speaker 53 for outputting the input voice, and a voice input/output I/F 54 for processing input and output of a voice signal between the microphone 52 and the speaker 53 under the control of the CPU 40. The communication terminal 13 also includes a display I/F 55 for transferring the video data to an external display 14 under the control of the CPU 40, an external apparatus I/F 56 for transmitting and receiving various types of data to and from an external apparatus, and a bus line 57, such as an address bus or a data bus, for enabling an electrical connection.

The storage medium 45 illustrated in Fig. 3 is detachably attachable to the communication terminal 13. Any nonvolatile memory that can read and write data under the control of the CPU 40 may be used instead of the flash memory 43. For example, an EEPROM (Electrically Erasable and Programmable ROM) may be used. As for the CCD 50, any solid imaging element that can capture a subject and convert light into an electric charge so as to digitize an image of the subject may be used rather than the CCD. For example, a CMOS (Complementary Metal Oxide Semiconductor) may be used.

The communication terminal program may be provided in a computer-installable or computer-executable file format, and may be downloaded from the program providing server 12. The communication terminal program may be provided by being stored in a computer-readable storage medium, such as the storage medium 45. The communication terminal 13 includes devices such as the CCD 50 and the microphone 52 in the example illustrated in Fig. 3. However, the communication terminal 13 may be a projector or a PC that does not include a CCD or a microphone.

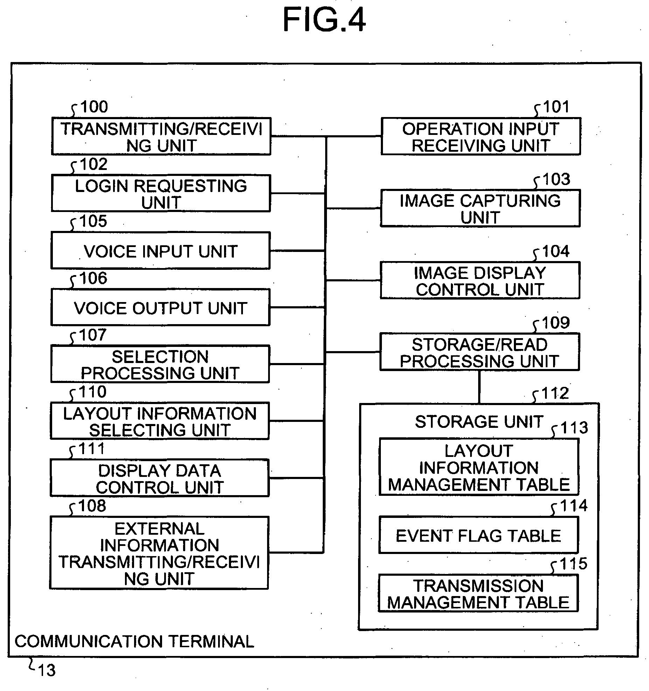

Before an explanation of functions and processes of the relay device 17, functions of the communication terminal 13 will be explained briefly because the relay device 17 serves as a device that relays data transmitted and received between the communication terminals 13. Fig. 4 is a functional block diagram illustrating an example of the communication terminal 13 included in the display data sharing system. The configuration illustrated in Fig. 4 is described as one example, and the present invention is not limited to this example.

The communication terminal 13 includes a transmitting/receiving unit 100, an operation input receiving unit 101, a login requesting unit 102, an image capturing unit 103, an image display control unit 104, a voice input unit 105, a voice output unit 106, a selection processing unit 107, an external information transmitting/receiving unit 108, a storage/read processing unit 109, a layout information selecting unit 110, and a display data control unit 111. All of the units are realized by causing any of the components illustrated in Fig. 3 to operate in response to a command issued by the CPU 40 according to the communication terminal program stored in the ROM 41.

When the external input device 15 is connected to the communication terminal 13, the external input device 15 transmits display data to the communication terminal 13, and the display data is transmitted to the relay device 17 via the communication network.

The transmitting/receiving unit 100 is realized by the network I/F 49 illustrated in Fig. 3, and transmits and receives various types of data to and from the other communication terminals 13 via the communication network. The operation input receiving unit 101 is realized by the operation button 47 and the power switch 48 illustrated in Fig. 3, and receives various types of input from a user. For example, when a user switches the power switch 48 to ON, the operation input receiving unit 101 receives information indicating that the power switch 48 is switched to ON and then turns on the power.

The login requesting unit 102 is realized by a command issued by the CPU 40 illustrated in Fig. 3. When the power is turned on, the login requesting unit 102 automatically transmits login request information indicating a login request or a current IP address of the communication terminal 13 from the transmitting/receiving unit 100 to the management server 11 via the communication network.

The image capturing unit 103 is realized by the CCD 50 and the imaging element I/F 51 illustrated in Fig. 3, and outputs video data that is obtained by capturing a subject. The image capturing unit 103 transmits the video data to the other communication terminals 13 via streaming distribution. The image display control unit 104 is realized by the display I/F 55 illustrated in Fig. 3, and controls transmission of the video data to the external display 14. The image display control unit 104 displays display data that is displayed and acquired by the display device of the external input device 15 connected to the communication terminal 13.

The voice input unit 105 is realized by the microphone 52 and the voice input/output I/F 54 illustrated in Fig. 3. The voice input unit 105 receives voice of a user, converts the voice into a voice signal, and outputs voice data corresponding to the voice signal. The voice input unit 105 measures the input level of the voice signal and compares the input level with a threshold or the like to determine whether the voice signal is present or absent. The voice output unit 106 is realized by the speaker 53 and the voice input/output I/F 54 illustrated in Fig. 3. The voice output unit 106 converts the voice signal corresponding to the voice data into voice and outputs the voice.

The selection processing unit 107 performs a process for selecting one of the relay devices 17. The selection processing unit 107 measures reception time and date at which the transmitting/receiving unit 100 receives pre-transmission information, for each piece of the pre-transmission information which contains transmission time and date and which is received by the transmitting/receiving unit 100. The selection processing unit 107 calculates an elapsed time between transmission and reception of the pre-transmission information based on the measured reception time and date and the transmission time and date contained in the pre-transmission information, for each piece of the pre-transmission information for which the reception time and date has been measured. The selection processing unit 107 selects, as one of the relay devices 17, the relay device 17 that relays the pre-transmission information in the shortest elapsed time among the calculated elapsed times.

The external information transmitting/receiving unit 108 is realized by the external apparatus I/F 56 illustrated in Fig. 3, and transmits and receives data to and from the external input device 15. The storage/read processing unit 109 is realized by the SSD 44 illustrated in Fig. 3, and performs a process for storing various types of data in a storage unit 112 of the communication terminal 13 and for reading the various types of the stored data. The storage unit 112 also stores therein terminal IDs and passwords for identifying the communication terminals 13, relay device IDs for identifying the relay devices 17 that transmit video data, voice data, and various other data, and IP addresses of the communication terminals 13 serving as destinations. The storage unit 112 also stores therein a layout information management table 113, an event flag table 114, and a transmission management table 115.

The layout information selecting unit 110 selects a shared flag from the event flag table 114 based on a display data distribution event, and sets the shared flag in the layout information management table 113 to provide layout information on a screen to be displayed by the display 14 to the image display control unit 104. Examples of the distribution event include a "distribution start event" that occurs when distribution of the display data is started, a "distribution stop event" that occurs when the distribution of the display data is stopped, an "other distribution event" that occurs when the other communication terminal 13 starts distribution of display data, and an "other distribution stop event" that occurs when the distribution by the other communication terminal 13 is stopped. When the "distribution start event" or the "other distribution event" occurs, because distribution of display data is started and the communication terminal 13 receives the display data, the layout information selecting unit 110 provides the layout information that enables to display the display data.

The display data control unit 111 acquires the display data from the external input device 15, and transmits the acquired display data to the communication terminal 13. The display data may be image data of an image displayed on the screen of the display device in JPEG (Joint Photographic Experts Group) format or bitmap format, or may be a drawing command in GDI (Graphics Device Interface) format. The display data control unit 111 sends a request to start or stop distribution of the display data to the relay device 17 in accordance with a request issued by the external input device 15. The display data control unit 111 determines the status of the display control flag by referring to the event flag table 114 according to the distribution event received from the relay device 17, and transmits the display control flag to the external input device 15. The display control flag is used by the communication terminal 13 to control display of a menu or the like that the external input device 15 displays on the display device of the external input device 15.

The transmission management table 115 is used to manage a transmission status indicating whether the video data captured by the image capturing unit 103 is transmitted to the relay device 17 or whether the display data is received from the external input device 15 connected to the communication terminal 13 and is transmitted to the relay device 17. For example, when reception of the display data from the external input device 15 is stopped and the distribution stop event occurs, the layout information selecting unit 110 receives the event and sets a flag in the layout information management table 113 to instruct the image display control unit 104 to switch a display screen. Furthermore, information on the transmission status in the transmission management table 115 is changed.

As for the display screen, it may be possible to receive information input by the operation input receiving unit 101 or the like as an event, and cause the layout information selecting unit 110 to receive the event and instruct the image display control unit 104 to arbitrarily switch the display screen. Even in this case, the information on the transmission status in the transmission management table 115 is changed.

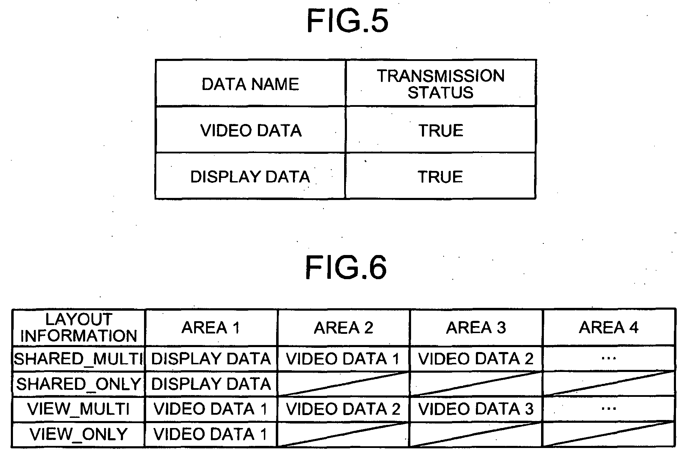

Fig. 5 is a diagram illustrating an example of the transmission management table 115. The transmission management table 115 manages a data name for identifying data to be transmitted to the relay device 17 and a transmission status of the data in an associated manner. The data name is, for example, "video data" or "display data". The transmission status is information indicating whether data is currently transmitted or not. When the data is transmitted, the transmission status is set to "TRUE". When the data is not transmitted, the transmission status is set to "FALSE". The above setting is described as one example. Therefore, it may be possible to include other information, such as a conference name or time and date, as information to be managed.

Fig. 6 is a diagram illustrating an example of a relationship between the layout information and video data or display data allocated to each area. The "layout information" is information on display of the video data and the display data. For example, the layout information is represented as "SHARED_MULTI", "SHARED_ONLY", "VIEW_MULTI", and "VIEW_ONLY". "SHARED_MULTI" indicates that all pieces of the video data and the display data received from each of the communication terminals 13 are displayed in a mixed manner. "SHARED_ONLY" indicates that only the display data is displayed on the entire screen. "VIEW_MULTI" indicates that all pieces of the video data received from each of the communication terminals 13 are displayed. "VIEW_ONLY" indicates that only a specific piece of the video data is displayed on the entire screen. The relationship is stored as relational data in the storage unit 112, and is referred to by the image display control unit 104 when the data is displayed on the screen.

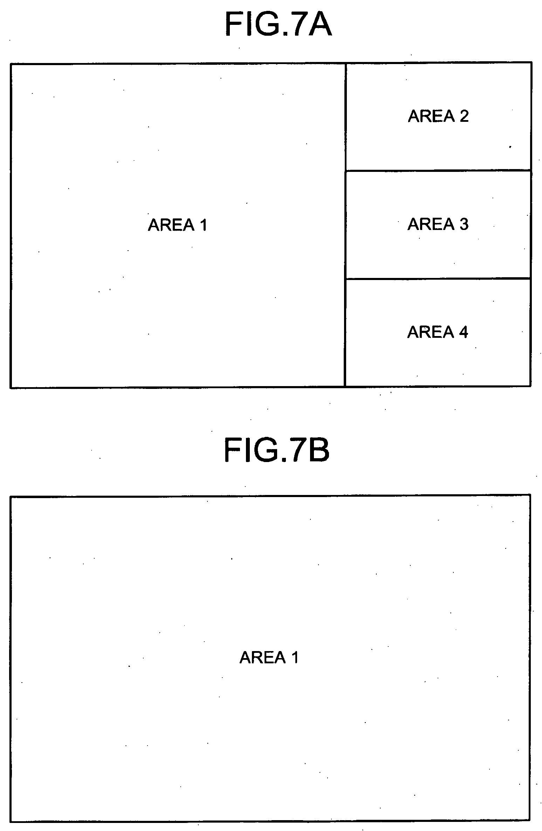

Figs. 7A and 7B are diagrams illustrating examples of a screen displayed on the display 14. Fig. 7A illustrates a screen displayed when "SHARED_MULTI" or "VIEW_MULTI" is selected as the layout information. Fig. 7B illustrates a screen displayed when "SHARED_ONLY" or "VIEW_ONLY" is selected. The layout information is selected by the layout information selecting unit 110 according to an event.

"SHARED_MULTI" and "VIEW_MULTI" are information for dividing the screen into a plurality of areas according to the number of the communication terminals 13 and allocating a piece of the video data or the display data to each of the areas in order to display the pieces of the video data and the display data. The size of each of the areas may be set in advance. In Fig. 7A, the screen is divided into four areas such that an area 1 has the greatest size while areas 2 to 4 have the same size and are arranged on the right side in the screen.

When "SHARED_MULTI" is selected, display data is displayed in the area 1 illustrated in Fig. 7A, video data 1 is displayed in the area 2, and video data 2 is displayed in the area 3. When "SHARED_ONLY" is selected, the screen is not divided and only the display data is displayed in the area 1 illustrated in Fig. 7B. When "VIEW_MULTI" is selected, similarly to the case of "SHARED_MULTI", the screen is divided into a plurality of areas but only the pieces of the video data are displayed without displaying the display data. When "VIEW ONLY" is selected, the screen is not divided and only one piece of the video data is displayed in the area 1 illustrated in Fig. 7B.

The above is described as one example. Therefore, it may be possible to display only the display data and the video data 1, display only the display data and the video data 2, display only the video data 1 and video data 3, display only the video data 2 and the video data 3, or display the video data 2 or the video data 3 on the either screen. When the video data is displayed, voice data received together with the video data is also reproduced. Therefore, it is possible to detect what talk is given by which participant displayed in what area.

The display data sharing system also includes the management server 11, the program providing server 12, the external input devices 15, and the routers 16. However, functions of these devices are not directly related to the present invention, and therefore, explanation thereof will be omitted.

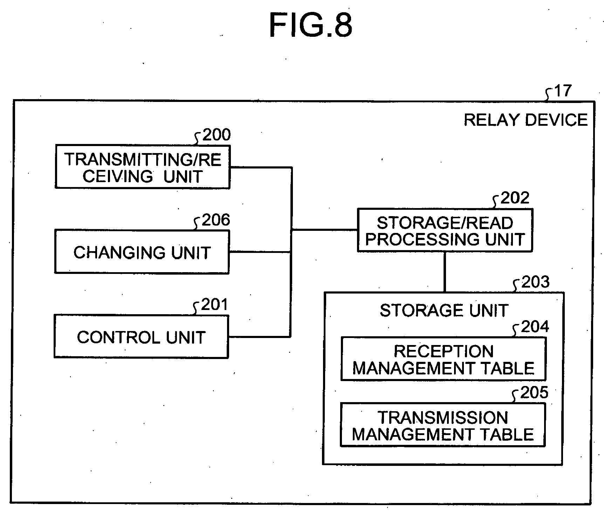

Fig. 8 is a functional block diagram illustrating an example of the relay device 17 according to the embodiment. To receive and transmit data from and to each of the communication terminals 13, the relay device 17 includes a transmitting/receiving unit 200, a control unit 201, a storage/read processing unit 202, a storage unit 203, and a changing unit 206. The transmitting/receiving unit 200 is realized by the network I/F 28 illustrated in Fig. 2, and functions as a receiving means for receiving a notice of changed layout information when the layout information is changed.

The transmitting/receiving unit 200 is caused to transmit and received data under the control of the control unit 201 that functions as a control means. The control unit 201 is realized by a command issued by the CPU 20 illustrated in Fig. 2. The control unit 201 instructs the storage/read processing unit 202 to read a reception management table 204 and a transmission management table 205 that are stored as management information in the storage unit 203, to receive data according to the contents set in the reception management table 204, and to transmit the received data according to the contents set in the transmission management table 205.

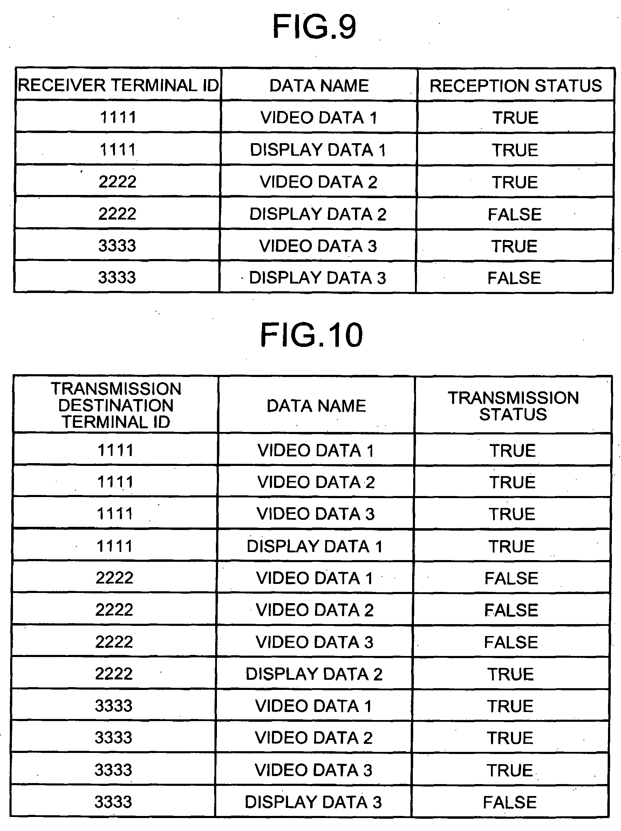

Fig. 9 is a diagram illustrating an example of the reception management table 204. A terminal ID for identifying each of the communication terminals 13 is assigned to each of the communication terminals 13. The reception management table 204 manages a terminal ID (receiver terminal ID) of the communication terminal 13 from which the video data or the display data is received, a data name of the received video data or display data, and a reception status, in an associated manner. The reception status is information indicating whether the relay device 17 receives data or not. When the data is received, the reception status is set to "TRUE". When the data is not received, the reception status is set to "FALSE".

Referring to the reception management table 204 illustrated in Fig. 9, it is indicated that the three communication terminals 13 with receiver terminal IDs of "1111", "2222", and "3333" conduct a remote conference. It is also indicated that the relay device 17 receives the video data 1 and display data 1 from the communication terminal 13 with the terminal ID "1111", receives only the video data 2 from the communication terminal 13 with the terminal ID "2222", and receives only the video data 3 from the communication terminal 13 with the terminal ID "3333".

Fig. 10 is a diagram illustrating an example of the transmission management table 205. The transmission management table 205 manages a terminal ID (transmission destination terminal ID) of the communication terminal 13 to which the relay device 17 transmits the video data or the display data, a data name of the transmitted video data or display data, and a transmission status, in an associated manner. The transmission status is information indicating whether the relay device 17 transmits data to the communication terminal 13. When the data is transmitted, the transmission status is set to "TRUE". When the data is not transmitted, the transmission status is set to "FALSE".

Referring to the transmission management table 205 illustrated in Fig. 10, it is indicated that the three communication terminals 13 with the transmission destination terminal IDs of "1111", "2222", and "3333" conduct a remote conference and data is transmitted to the three communication terminals 13. It is also indicated that the relay device 17 transmits four pieces of data, in particular, the video data 1, the video data 2, the video data 3, and the display data 1 to the communication terminal 13 with the terminal ID "1111", transmits only display data 2 to the communication terminal 13 with the terminal ID "2222", and transmits the video data 1, the video data 2, and the video data 3 to the communication terminal 13 with the terminal ID "3333".

Referring back to Fig. 8, the above-described notice received by the transmitting/receiving unit 200 is sent to the changing unit 206 serving as a changing means. The changing unit 206 instructs the storage/read processing unit 202 to read the transmission management table 205, and changes the setting of the transmission status in the transmission management table 205 based on the notified layout information. The changing unit 206 is realized by a command issued by the CPU 20 illustrated in Fig. 2. For example, when one of the communication terminals 13 that has displayed the display data and the video data changes a screen display to display only the display data, the changed layout information indicates that only the display data is arranged in each area on the screen. When the changing unit 206 receives the layout information, the changing unit 206 changes the transmission status of the voice data associated with the terminal ID of the communication terminal 13 from "TRUE" to "FALSE".

The changing unit 206 instructs the storage/read processing unit 202 to store the changed information in the storage unit 203 in order to update the transmission management table 205. The control unit 201 controls data transmission according to the transmission management table 205. Therefore, if the transmission status is changed as described above, the control unit 201 stops transmission of the video data to the communication terminal 13 according to the changed contents. Therefore, it becomes possible to stop transmission of unnecessary video data that is not to be displayed, enabling to reduce network load. While transmission of the video data is stopped in the example, it may be possible to stop transmission of display data that is not to be displayed or stop transmission of display data and video data that are not to be displayed.

The relay device 17 may further include a determining unit as a determining means and a notifying unit as a notifying means in addition to the transmitting/receiving unit 200, the control unit 201, the storage/read processing unit 202, the storage unit 203, and the changing unit 206 illustrated in Fig. 8. When a plurality of pieces of video data, such as the video data 1, the video data 2, and the video data 3 as illustrated in Fig. 6, to be transmitted and received are relayed, the determining unit determines whether there is video data that is not to be transmitted to any of the communication terminals 13, i.e., video data with the status of "FALSE", in the transmission management table 205 changed by the changing unit 206.

For example, if the transmission status of the video data 1 is "FALSE" for all of the communication terminals 13, the determining unit determines that there is video data that is not to be transmitted to any of the communication terminals 13. The notifying unit sends a notice to stop transmission of the video data 1 to all of the communication terminals 13 that transmit the video data 1. Therefore, each of the communication terminals 13 stops transmission of the video data to the relay device 17, so that the network load can further be reduced.

When the determining unit determines that all pieces of the video data are not to be transmitted to any of the communication terminals 13 according to the changed transmission management table 205, the control unit 201 may stop transmission of all pieces of the video data to all of the communication terminals 13, and the notifying unit may send a notice to stop transmission of all pieces of the video data to all of the communication terminals 13 that transmit any piece of the video data. The determining unit and the notifying unit are realized by a command issued by the CPU 20 illustrated in Fig. 2.

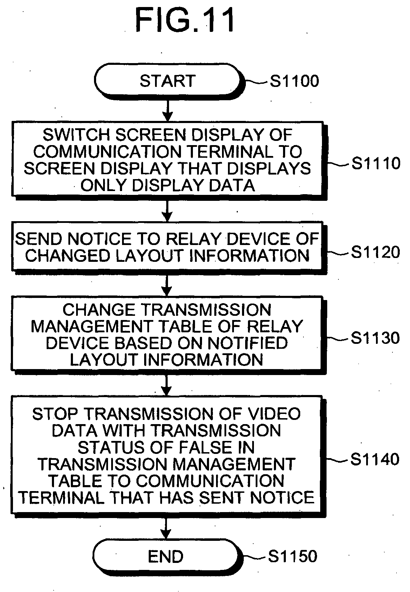

A process performed by the display data sharing system will be explained in detail below with reference to a flowchart illustrated in Fig. 11. At Step S1100, the process starts when a plurality of the communication terminals 13 start a teleconference by transmitting and receiving data via the relay device 17. At the beginning of the process, it is assumed that, for example, all of the communication terminals 13 are set to "SHARED_MULTI" by default setting. Therefore, a plurality of divided areas as illustrated in Fig. 7A are displayed on the screen of the display 14 of each of the communication terminals 13 such that data is displayed in the area 1 having the greatest size and video data captured and transmitted by other communication terminals is displayed in the area 2 smaller than the area 1.

At Step S1110, when a participant causes an event that changes the layout information to "SHARED_ONLY" to occur in any of the communication terminals 13 by using the operation button 47 or a mouse of the external input device 15, the layout information selecting unit 110 of the subject communication terminal 13 detects the event, sets a flag in the layout information management table 113, and instructs the image display control unit 104 to switch to a display that displays only the display data.

At Step S1120, the communication terminal 13 notifies the relay device 17 of the changed layout information "SHARED_ONLY" by using the transmitting/receiving unit 100. At Step S1130, the changing unit 206 of the relay device 17 changes the transmission management table 205 stored in the storage unit 203 of the relay device 17 based on the layout information notified by the communication terminal 13. Specifically, the transmission status of video data that is not used in the screen display of the communication terminal 13 that has sent the notice is changed to "FALSE".

At Step S1140, the control unit 201 of the relay device 17 identifies the communication terminal 13 serving as a transmission destination and video data to be transmitted to the communication terminal 13 based on the transmission destination terminal ID and the data name for which the transmission status is changed to "FALSE" in the transmission management table 205, and stops transmission of the video data to the communication terminal 13 that has sent the notice. Then the process proceeds to Step S1150, and the process is finished.

For example, when the communication terminal 13 with the transmission destination terminal ID "1111" contained in the transmission management table 205 illustrated in Fig. 10 changes the layout information from "SHARED_MULTI" to "SHARED_ONLY" to change a display screen, the relay device 17 receives a notice of "SHARED_ONLY" as the changed layout information from the communication terminal 13. The changing unit 206 of the relay device 17 changes all the transmission statuses of "TRUE" of the video data 1, the video data 2, and the video data 3 associated with the transmission destination terminal ID "1111" in the transmission management table 205 illustrated in Fig. 10 to "FALSE". Therefore, the control unit 201 of the relay device 17 stops transmission of the video data 1, the video data 2, and the video data 3 whose transmission statuses have been changed to "FALSE" to the communication terminal 13 with the transmission destination terminal ID "1111" by referring to the changed transmission management table 205.

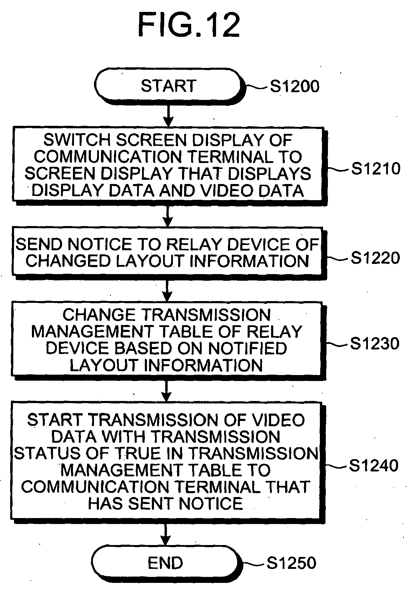

In the example illustrated in Fig. 11, a case is explained that one of the communication terminals 13 switches to a display screen that displays only the display data. With reference to Fig. 12, another case will be explained below that a display screen that has displayed only the display data is switched back to a display screen that displays video data as well as the display data. Referring to a flowchart illustrated in Fig. 12, the process starts at Step S1200. At Step S1210, the communication terminal 13 switches to a display screen that displays video data as well as the display data. Specifically, when a participant causes an event that changes the layout information to "SHARED_MULTI" to occur by using the operation button 47 or the mouse of the external input device 15, the layout information selecting unit 110 of the corresponding communication terminal 13 detects the event, sets a flag in the layout information management table 113, and instructs the image display control unit 104 to switch to a display that displays both of the display data and the video data.

At Step S1220, the communication terminal 13 notifies the relay device 17 of the changed layout information "SHARED_MULTI" by using the transmitting/receiving unit 100. At Step S1230, the changing unit 206 of the relay device 17 changes the transmission management table 205 stored in the storage unit 203 of the relay device 17 based on the layout information notified by the communication terminal 13. Specifically, the transmission status of the video data that is started to be used in the screen display of the communication terminal 13 that has sent the notice is changed to "TRUE".

At Step S1240, the control unit 201 of the relay device 17 identifies the communication terminal 13 serving as a transmission destination and video data to be transmitted to the communication terminal 13 based on the transmission destination terminal ID and the data name for which the transmission status is changed to "TRUE" in the transmission management table 205, and starts transmission of the video data to the communication terminal 13 that has sent the notice. Then, the process proceeds to Step S1250, and the process is finished.

For example, when the communication terminal 13 with the transmission destination terminal ID "1111" contained in the transmission management table 205 illustrated in Fig. 10 changes the layout information from "SHARED_ONLY" to "SHARED_MULTI" to change a display screen, the relay device 17 receives a notice of "SHARED_MULTI" as the changed layout information from the communication terminal 13. The changing unit 206 of the relay device 17 changes all the transmission statuses of "FALSE" of the video data 1, the video data 2, and the video data 3 associated with the transmission destination terminal ID "1111" in the transmission management table 205 illustrated in Fig. 10 to "TRUE". Therefore, the control unit 201 of the relay device 17 starts transmission of the video data 1, the video data 2, and the video data 3 whose transmission statuses have been changed to "TRUE" to the communication terminal 13 with the transmission destination terminal ID "1111" by referring to the changed transmission management table 205.

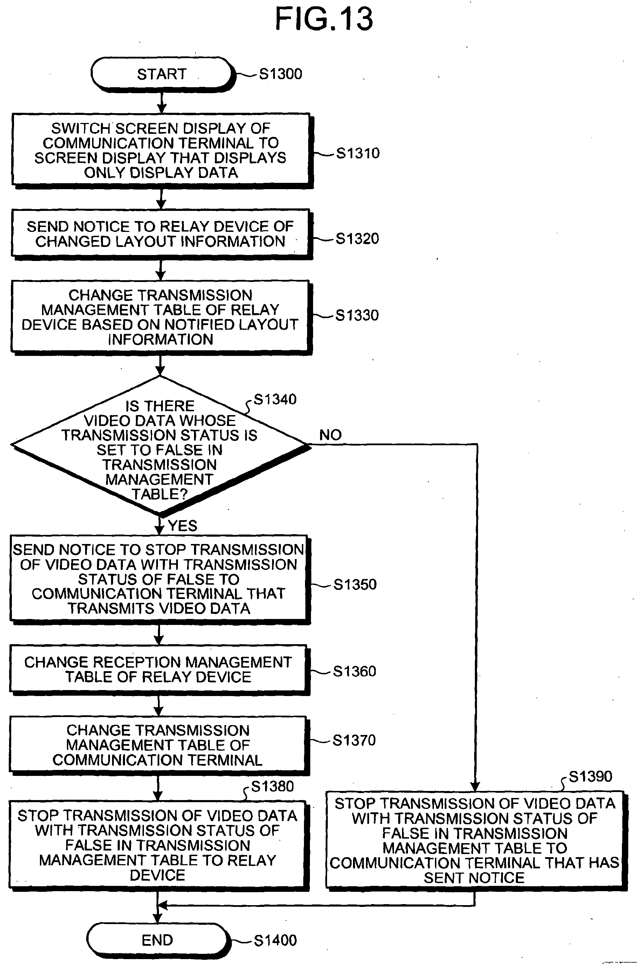

With reference to a flowchart in Fig. 13, an explanation is given of a process performed when screen displays of all of the communication terminals used by all participants of a remote conference are changed to screen displays that display the display data. The process starts at Step S1300. The process from Step S1310 to Step S1330 is the same as the process from Step S1110 to Step S1130 in Fig. 11.

At Step S1340, the relay device 17 determines whether there is video data whose transmission status is set to "FALSE" for all of the terminals in the transmission management table 205. When it is determined that there is no video data whose transmission status is set to "FALSE" for all of the terminals, there is the communication terminal 13 to which the video data is to be transmitted. Therefore, at Step S1390, transmission of the video data with the transmission status of "FALSE" in the transmission management table 205 to the communication terminal 13 that has sent the notice is stopped. At Step S1400, the process is finished.

When it is determined that there is video data whose transmission status is set to "FALSE" for all of the terminals at Step S1340, the process proceeds to Step S1350, at which a notice to stop transmission of the video data is sent to all of the communication terminals 13 that transmit the video data. At Step S1360, the relay device 17 acquires a transmission destination terminal ID associated with the data name of the video data in the transmission management table 205, and changes the reception status of the video data associated with a corresponding receiver terminal ID in the reception management table 204 to "FALSE".

At Step S1370, each of the communication terminals 13 that have received the notice changes the transmission status of the video data in the transmission management table 115 stored in each of the communication terminals 13 to "FALSE". At Step S1380, each of the communication terminals 13 stops the transmission of the video data whose transmission status has been changed to "FALSE". Then, the process proceeds to Step S1400 and the process is finished.

In this way, by stopping the transmission of the video data from the relay device 17 to the communication terminal 13 when the communication terminal 13 switches to a display that displays only the display data, it becomes possible to reduce data volume between the relay device 17 and the communication terminal 13, enabling to reduce network load. The size of the video data is generally greater than the size of the display data. Therefore, by stopping the transmission of unnecessary video data, it becomes possible to achieve a greater advantageous effect in further reducing network load.

Furthermore, it is possible to cause the external input device 15 to activate application software used for display and to encode the display data. Therefore, it is possible to reduce load on the CPU of the communication terminal 13. Moreover, when all of the communication terminals 13 display only the display data, it is possible to stop video data transmitted from each of the communication terminals 13 to the relay device 17. Therefore, it is possible to further reduce network load.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A relay device (17) for relaying data transmitted and received between communication terminals (13), the relay device (17) being **characterized by**:
a receiving unit (200) configured to receive a notice of changed layout information from a communication terminal (13) that displays at least one of image data of a captured image and display data of a document in at least one area of a screen based on layout information, the image data and the display data being contained in the data transmitted and received between the communication terminals (13);
a changing unit (206) configured to change management information for managing transmission of the data to the communication terminal (13) according to the notified layout information; and
a control unit configured to control transmission of at least one of the display data and the image data to the communication terminal according to the changed management information.

2. The relay device (17) according to claim 1, wherein when the notified layout information indicates display of only the display data, the control unit (201) stops transmission of the image data to the communication terminal (13) according to the changed management information.

3. The relay device (17) according to claim 1, wherein
the data contains a plurality of pieces of the image data, and
the relay device (17) further comprises
a determining unit configured to determine whether the changed management information contains image data that is not to be transmitted to any of the communication terminals (13); and
a notifying unit configured to send a notice to stop transmission of the image data to all of the communication terminals (13) that transmit the image data when the determining unit determines that there is the image data that is not to be transmitted to any of the communication terminals (13).

4. The relay device (17) according to claim 3, wherein
when the determining unit determines that all pieces of the image data are not to be transmitted to any of the communication terminals (13) according to the changed management information, the control unit (201) stops transmission of all piece of the image data to the communication terminals (13) and the notifying unit sends a notice to stop transmission of all pieces of the image data to all of the communication terminals (13) that transmit any piece of the image data.

5. The relay device (17) according to any one of claim 1 to 4, wherein the display data is received from an external input device (15) connected to the communication terminal (13).

6. A display data sharing system comprising:
two or more communication terminals (13); and
the relay device (17) according to any one of claims 1 to 5 that relays data transmitted and received between the communication terminals (13).

7. A data control method implemented by a relay device (17) that relays data transmitted and received between communication terminals (13), the data control method being charterized by:
receiving a notice of changed layout information from a communication terminal (13) that displays at least one of image data of a captured image and display data of a document in at least one area of a screen based on layout information, the image data and the display data being contained in the data transmitted and received between the communication terminals (13);
changing management information for managing transmission of the data to the communication terminal (13) according to the notified layout information; and
controlling transmission of at least one of the display data and the image data to the communication terminal (13) according to the changed management information.

8. The data control method according to claim 7, wherein
the data contains a plurality of pieces of the image data, and
the data control method further comprises
determining whether the changed management information contains image data that is not to be transmitted to any of the communication terminals (13); and
sending a notice to stop transmission of the image data to all of the communication terminals (13) that transmit the image data when it is determined at the determining that there is the image data that is not to be transmitted to any of the communication terminals (13).

9. The data control method according to claim 7 or 8, further comprising receiving the display data from an external input device (15) connected to the communication terminal.

10. A computer-readable storage medium with an executable program stored thereon, wherein the program instructs a computer to execute the data control method according to any one of claims 7 to 9.

## Patentansprüche

1. Weiterleitungsvorrichtung (17) zum Weiterleiten von zwischen Kommunikationsendgeräten (13) gesendeten und empfangenen Daten, wobei die Weiterleitungsvorrichtung (17) **gekennzeichnet ist durch**:
eine Empfangseinheit (200), die konfiguriert ist, eine Mitteilung über geänderte Layout-Informationen von einem Kommunikationsendgerät (13) zu empfangen, das Bilddaten eines aufgenommen Bildes und/oder Anzeigedaten eines Dokuments in mindestens einem Bereich eines Bildschirms anhand von Layout-Informationen anzeigt, wobei die Bilddaten und die Anzeigedaten in den zwischen den Kommunikationsendgeräten (13) gesendeten und empfangenen Daten enthalten sind;
eine Änderungseinheit (206), die konfiguriert ist, Managementinformationen zum Managen des Sendens der Daten an das Kommunikationsendgerät (13) gemäß den mitgeteilten Layout-Informationen zu ändern; und
eine Steuereinheit, die konfiguriert ist, das Senden der Anzeigedaten und/oder der Bilddaten an das Kommunikationsendgerät gemäß den geänderten Managementinformationen zu steuern.

2. Weiterleitungsvorrichtung (17) nach Anspruch 1, wobei dann, wenn die mitgeteilten Layout-Informationen nur die Anzeige der Anzeigedaten angeben, die Steuereinheit (205) das Senden der Bilddaten an das Kommunikationsendgerät (13) gemäß den geänderten Managementinformationen stoppt.

3. Weiterleitungsvorrichtung (17) nach Anspruch 1, wobei
die Daten mehrere Teile der Bilddaten enthalten und
die Weiterleitungsvorrichtung (17) ferner umfasst:
eine Bestimmungseinheit, die konfiguriert ist, zu bestimmen, ob die geänderten Managementinformationen Bilddaten enthalten, die an keines der Kommunikationsendgeräte (13) zu senden sind; und
eine Mitteilungseinheit, die konfiguriert ist, eine Mitteilung zu senden, um das Senden der Bilddaten an alle Kommunikationsendgeräte (13) zu stoppen, die die Bilddaten senden, wenn die Bestimmungseinheit bestimmt, dass Bilddaten vorhanden sind, die an keines der Kommunikationsendgeräte (13) zu senden sind.

4. Weiterleitungsvorrichtung (17) nach Anspruch 3, wobei
dann, wenn die Bestimmungseinheit bestimmt, dass gemäß den geänderten Managementinformationen keine Bilddatenteile an Kommunikationsendgeräte (13) zu senden sind, die Steuereinheit (201) das Senden aller Teile der Bilddaten an die Kommunikationsendgeräte (13) stoppt und die Mitteilungseinheit eine Mitteilung an alle Kommunikationsendgeräte (13), die irgendein Teil der Bilddaten senden, sendet, damit sie das Senden aller Teile der Bilddaten stoppen.

5. Weiterleitungsvorrichtung (17) nach einem der Ansprüche 1 bis 4, wobei die Anzeigedaten von einer externen Eingabevorrichtung (15), die mit dem Kommunikationsendgerät (13) verbunden ist, empfangen werden.

6. Anzeigedatenteilsystem, das umfasst:
zwei oder mehr Kommunikationsendgeräte (13); und
die Weiterleitungsvorrichtung (17) nach einem der Ansprüche 1 bis 5, die zwischen den Kommunikationsendgeräten (13) gesendete und empfangene Daten weiterleitet.

7. Datensteuerverfahren, das durch eine Weiterleitungsvorrichtung (17) implementiert wird, die zwischen Kommunikationsendgeräten (13) gesendete und empfangene Daten weiterleitet, wobei das Datensteuerverfahren **gekennzeichnet ist durch**:
Empfangen einer Mitteilung über geänderte Layout-Informationen von einem Kommunikationsendgerät (13), das Bilddaten eines aufgenommen Bildes und/oder Anzeigedaten eines Dokuments in mindestens einem Bereich eines Bildschirms anhand von Layout-Informationen anzeigt, wobei die Bilddaten und die Anzeigedaten in den zwischen den Kommunikationsendgeräten (13) gesendeten und empfangenen Daten enthalten sind;
Ändern von Managementinformationen zum Managen des Sendens der Daten an das Kommunikationsendgerät (13) gemäß den mitgeteilten LayoutInformationen; und
Steuern des Sendens der Anzeigedaten und/oder der Bilddaten an das Kommunikationsendgerät (13) gemäß den geänderten Managementinformationen.

8. Datensteuerverfahren nach Anspruch 7, wobei
die Daten mehrere Teile der Bilddaten enthalten und
das Datensteuerverfahren ferner umfasst:
Bestimmen, ob die geänderten Managementinformationen Bilddaten enthalten, die an keines der Kommunikationsendgeräte (13) zu senden sind; und
Senden einer Mitteilung an alle Kommunikationsendgeräte (13), die die Bilddaten senden, damit sie das Senden der Bilddaten stoppen, wenn bei der Bestimmung bestimmt wird, dass Bilddaten vorhanden sind, die an keines der Kommunikationsendgeräte (13) zu senden sind.

9. Datensteuerverfahren nach Anspruch 7 oder 8, das ferner umfasst, die Anzeigedaten von einer externen Eingabevorrichtung (15), die mit dem Kommunikationsendgerät verbunden ist, zu empfangen.

10. Computerlesbares Speichermedium mit einem darauf gespeicherten ausführbaren Programm, wobei das Programm einen Computer anweist, das Datensteuerverfahren nach einem der Ansprüche 7 bis 9 auszuführen.

## Revendications

1. Dispositif de relais (17) pour relayer des données transmises et reçues entre des terminaux de communication (13), le dispositif de relais (17) étant **caractérisé par** :
une unité de réception (200) configurée pour recevoir une notification d'information de mise en page modifiée à partir d'un terminal de communication (13) qui affiche au moins une des données d'image d'une image capturée et des données d'affichage d'un document dans au moins une zone d'un écran en fonction d'une information de mise en page, les données d'image et les données d'affichage étant contenues dans les données transmises et reçues entre les terminaux de communication (13) ;
une unité de modification (206) configurée pour modifier une information de gestion pour gérer une transmission des données au terminal de communication (13) selon l'information de mise en page notifiée ; et
une unité de contrôle configurée pour contrôler une transmission d'au moins une des données d'affichage et des données d'image au terminal de communication selon l'information de gestion modifiée.

2. Dispositif de relais (17) selon la revendication 1, dans lequel, lorsque l'information de mise en page notifiée indique l'affichage de seulement les données d'affichage, l'unité de contrôle (201) stoppe la transmission des données d'image au terminal de communication (13) selon l'information de gestion modifiée.

3. Dispositif de relais (17) selon la revendication 1, dans lequel
les données contiennent une pluralité de données d'image, et
le dispositif de relais (17) comporte en outre
une unité de détermination configurée pour déterminer si l'information de gestion modifiée contient des données d'image qui ne doivent pas être transmises à l'un quelconque des terminaux de communication (13) ; et
une unité de notification configurée pour envoyer une notification afin de stopper la transmission des données d'image à tous les terminaux de communication (13) qui transmettent les données d'image lorsque l'unité de détermination détermine qu'il existe des données d'image qui ne doivent pas être transmises à l'un quelconque des terminaux de communication (13).

4. Dispositif de relais (17) selon la revendication 3, dans lequel
lorsque l'unité de détermination détermine que toutes les données d'image ne doivent pas être transmises à l'un quelconque des terminaux de communication (13) selon l'information de gestion modifiée, l'unité de contrôle (201) stoppe la transmission de toutes les données d'image aux terminaux de communication (13) et l'unité de notification envoie une notification pour stopper la transmission de toutes les données d'image à tous les terminaux de communication (13) qui transmettent l'une quelconque des données d'image.

5. Dispositif de relais (17) selon l'une quelconque des revendications 1 à 4, dans lequel les données d'affichage sont reçues depuis le dispositif d'entrée externe (15) relié au terminal de communication (13).

6. Système de partage de données d'affichage comportant :
deux ou plusieurs terminaux de communication (13); et
le dispositif de relais (17) selon l'une quelconque des revendications 1 à 5 qui relaye les données transmises et reçues entre les terminaux de communication (13).

7. Procédé de contrôle de données mis en oeuvre par un dispositif de relais (17) qui relaye les données transmises et reçues entre des terminaux de communication (13), le procédé de contrôle de données étant **caractérisé par** :
la réception d'une notification d'information de mise en page modifiée à partir d'un terminal de communication (13) qui affiche au moins une des données d'image d'une image capturée et des données d'affichage d'un document dans au moins une zone d'un écran en fonction d'une information de mise en page, les données d'image et les données d'affichage étant contenues dans les données transmises et reçues entre les terminaux de communication (13) ;
la modification de l'information de gestion pour gérer une transmission des données au terminal de communication (13) selon l'information de mise en page notifiée ; et
le contrôle de la transmission d'au moins une des données d'affichage et des données d'image au terminal de communication (13) selon l'information de gestion modifiée.

8. Procédé de contrôle de données selon la revendication 7, dans lequel
les données contiennent une pluralité de données d'image, et
le procédé de contrôle de données comporte en outre
la détermination si l'information de gestion modifiée contient ou non des données d'images qui ne doivent pas être transmises à l'un quelconque des terminaux de communication (13) ; et
l'envoi d'une notification pour stopper la transmission des données d'image à tous les terminaux de communication (13) qui transmettent les données d'image s'il est déterminé au moment de la détermination qu'il existe des données d'image qui ne doivent pas être transmises à l'un quelconque des terminaux de communication (13).

9. Procédé de contrôle de données selon la revendication 7 ou 8, comportant en outre la réception des données d'affichage à partir d'un dispositif d'entrée externe (15) relié au terminal de communication.

10. Support de stockage pouvant être lu par un ordinateur comportant un programme exécutable, dans lequel le programme ordonne à l'ordinateur d'exécuter le procédé de contrôle de données selon l'une quelconque des revendications 7 à 9.
